# EUROPEAN PATENT APPLICATION

(11) **EP 1 152 552 A2**
(43) Date of publication of application: **07.11.2001**
(21) Application number: 01109273.1
(22) Date of filing: 14.04.2001
(51) Int. Cl.: H04B 7/185

(54) **System and method for two-way communications using a high altitude communication device**

(30) Priority: 05.05.2000 US 566759
(71) Applicant: Hughes Electronics Corporation, El Segundo, California 90245-0956 (US)
(72) Inventor: Novak, John I. III, West Hills, CA 91307 (US); Thompson, Brian, Palos Verdes Estates, CA 90247 (US)
(74) Representative: Lindner, Michael, Dipl.-Ing.

(57) **Abstract**

A communications system (10) includes a high altitude communication device (12, 44) creating a forward communications link (30). A terrestrial wireless network (16) creates a return link (38). A user terminal (14) is coupled to the high altitude communication device for receiving forward communications signals and is coupled to a wireless network for creating a return link. A network operations center (NOC) (20) having a gateway for communicating with the high altitude communications device is coupled to the terrestrial wireless network. The NOC receives communications requests from the user terminal and provides content to the user terminal in response to the request (Fig. 1).

## Description

The present invention relates generally to wireless communications and, more particularly, to a system for enabling two-way wireless communications.

### Background Art

In this communication age content providers are increasingly investigating ways in which to provide more content to users as well as interfacing with users.

The latest communication systems use digital broadcast satellites to broadcast to users in a forward direction. System operators have recognized that user requests are relatively small in terms of data compared to the amount of data broadcast from the satellite. Thus, for example, in the DirecTV® system, user requests are transmitted through telephone lines and programming is provided to the users via satellite.

In addition to satellites stratospheric platforms are currently under development. Once such stratospheric platform is Helios that is being developed by AeroVironment. The Helios stratosphere platform is an unmanned vehicle that can fly for several months at a height of about 60,000 feet. Helios is a solar powered electric plan that is modular in design and may be configured to carry a variety of payloads. The stratospheric platforms have numerous advantages including that capacity can he concentrated over a populated area, transmission delays associated with geostationary satellites are significantly reduced, the power required for transmitting and receiving is substantially smaller than satellites, and the elevation angles of the system a high. Also, these stratospheric platforms can be deployed relatively rapidly compared to satellites and thus, if a need increases, the system capability may be increased.

One drawback to systems such as DirecTV® or DirectPC® are that the systems are not mobile. One known mobile system is the digital satellite radio systems that are currently under development. The digital broadcast radio systems use orbiting satellites to communicate with users both at home and in mobile applications such as automotive vehicles. Digital broadcast radio is similar to conventional radio systems in that merely a receiving device is used to receive the information from the satellites. Known digital broadcast radios do not allow users to transmit information.

The proliferation of the Internet continues to increase. Devices such as personal digital assistants such as the Palm Pilot™ allow wireless communications with terrestrial cellular phone networks. The personal digital assistants allows limited access to the Internet. Such access, however, is severely limited by the capability of the cellular network. Both the receiving and transmitting aspects of the Palm Pilot™ may be characterized as low bandwidth.

It would therefore be desirable to provide a system that allows high bandwidth connectivity to the Internet or data sources while allowing the user to request information without the obligations of providing a satellite uplink.

### Summary Of The Invention

It is therefore one object of the present invention to provide a communications system that has a high bandwidth forward link and a low bandwidth return link through terrestrial wireless sources.

In one aspect of the invention, a communications system includes a high altitude communication device creating a forward communications link. A terrestrial wireless network creates a return link. A user terminal is coupled to the high altitude communication device for receiving forward communications signals and is coupled to a wireless network for creating a return link. A network operations center (NOC) having a gateway for communicating with the high altitude communications device is coupled to the terrestrial wireless network. The NOC receives communications requests from the user terminal and provides content to the user terminal in response to the request.

In a further aspect of the invention, a method for operating a communications system comprises:
generating forward link signals to users through a high altitude communications device; and
generating a return link from users through a terrestrial wireless network.

In a further aspect of the invention, a user terminal has a housing and antenna. A satellite receiver is enclosed within the housing and is coupled to the antenna. A cellular transmitter is also disposed within the housing and is coupled to the antenna. A display device and a data entry device are also disposed within the housing. A processor is coupled to the satellite receiver, the cellular transmitter, the display device, and the data entry device. A cellular receiver may also be coupled within the housing.

One advantage of the invention is that the system enables delivery of high bandwidth content to mobile users while allowing the users to communicate with the system through a low bandwidth communications link. Another advantage of the invention is that by using a terrestrial based cellular network for the return link, the complications of providing a satellite transponder at the user terminal is eliminated.

Other objects and features of the present invention will become apparent when viewed in light of the detailed description of the preferred embodiment when taken in conjunction with the attached drawings and appended claims.

### Brief Description of the Drawings

Figure 1 is a system diagrammatic view of a first embodiment of a communication system according to the present invention.
Figure 2 is a second embodiment of a communications system according to the present invention.
Figure 3 is a block diagram of a user terminal for use with a communication system according to the present invention.

### Best Modes For Carrying Out The Invention

In the following figures the same reference numerals will be used to identify the same components in the various views. While particular uses and numeric values are described, these values are provided by way of example only and are not meant to limit the scope of the invention.

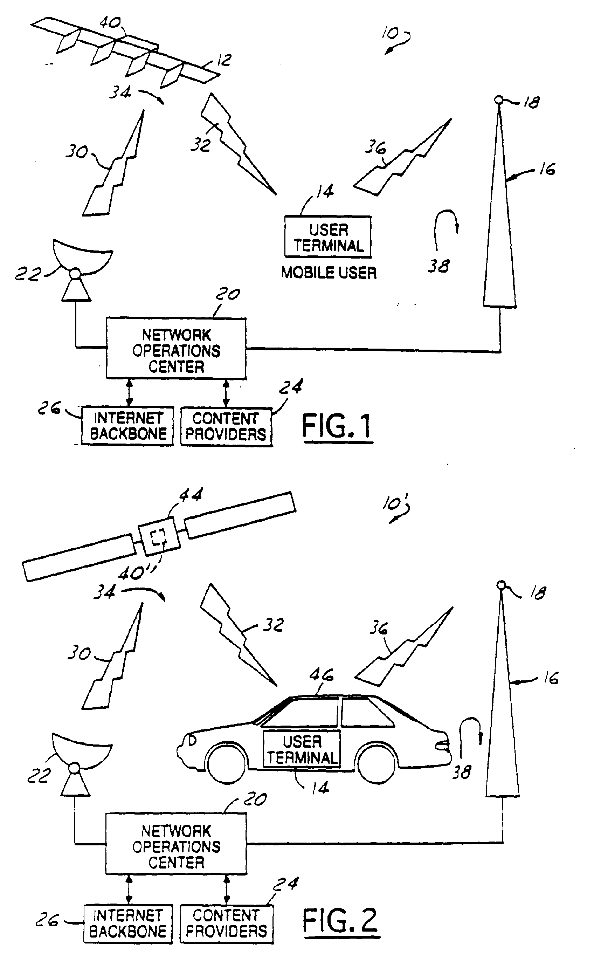

Referring now to Figure 1, a communications system 10 is illustrated having a high altitude communications device such as a stratospheric platform that is used to communicate with a user terminal 14. The user terminal 14 is used to communicate with a terrestrial wireless network 16 that has an antenna IS. The terrestrial wireless network 16 is coupled to a network operations center (NOC) 20. NOC 20 is coupled to a gateway 22 that communicates with stratospheric platform 12. NOC 20 is coupled to data sources such as content providers 24 and/or an Internet backbone 26. Generally, gateway 22 and stratospheric platform 12 generate uplink communications signals and downlink communications signals 32 to form a forward link 34. Also, user terminal 14 generates a return communication signal 36 to terrestrial wireless network 16 to form a return link 38.

Stratospheric platform 12 may be one of the type described above in the background of the invention. Namely, stratospheric platform 12 may be one of a variety of stratospheric platforms currently under development. Stratospheric platform 12 may include the Helios platform being developed by AeroVironment. The stratospheric platform 12 is designed to provide coverage to a limited area, for example, 100 kilometers in diameter. The stratospheric platform has control circuitry 40 that preferably has two modes of operation. The first mode of operation is point-to-multi-point communication. This is commonly known as broadcast communication. Also, the platform 12 may employ point-to-point communication in response to user requests as will be further described below.

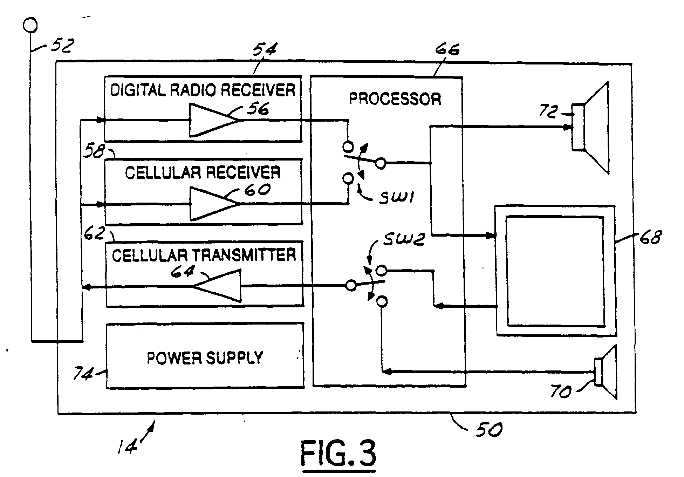

User terminal 14 is meant to represent a plurality of user terminals. The user terminal 14 receives downlink communications signal 32 and transmits requests and other information to terrestrial wireless network 16. User terminal 14 may also be equipped to receive wireless communications signals from terrestrial wireless network 16. The high level circuitry of user terminal 14 is further described below in Figure 3. The user terminal may, for example, be a personal digital assistant (PDA) such as the Palm Pilot™ device. The device may also include voice capability similar to that of a cell phone.

Terrestrial wireless network 16 is preferably a terrestrial cellular network. One advantage of using the available terrestrial cellular network is that the infrastructure currently exists. Another advantage is that coverage is widely available and terminals may be widely produced and are compact and low cost. Preferably, terrestrial wireless network 16 is part of the digital or personal communication service (PCS) systems currently available. The PCS works in the range from about 1850 MHz to 1990 MHz. The frequency ranges are divided into a series of bands for phone transmitting and base transmitting that are between 5 and 15 MHz wide. By using code division multiplexing (CDM) each band may support 165 to 449 channels at 30 KHz wide. The 30 KHz channels provide-sufficient bandwidth for voice transmissions as well as other digital services such as e-mail and caller ID.

The terrestrial wireless network 16 is preferably compatible with the so-called third generation mobile standards. The third generation mobile standards are for high bandwidth connections to mobile and fixed users. The standards supports rates of 144 kbps to mobile users and up to 2 Mbps to fixed users. The standard is Internet protocol (IP) based and allows variable data rates depending on the application.

As illustrated, only one antenna 18 is shown. However, the terrestrial wireless network has a plurality of antennas 18 to provide coverage in a wide service area.

Network operations center 20 provides an interface between the terrestrial wireless network 16 and the stratospheric platform 12. Also, NOC 20 provides connectivity to the Internet through Internet backbone 26 and various content such as digital radio broadcast provider through content providers 24. NOC 20 is responsible for traffic management of the system, access control, and customer billing.

In operation, user terminal 14 may simply be used to receive broadcast data such as digital radio or other programming content. However, the user through user interface 14 may request content through forward link 38 which communicates through terrestrial wireless network 16 to NOC 20. NOC 20 will obtain the requested information from a content provider 24 or if Internet information is requested from Internet backbone 26. NOC 20 through forward link 34 provides an uplink signal 30 to platform 12. The platform 12 provides the information to user terminal 14 through downlink communication signal 32. The system is advantageous in that the user terminal 14 typically sends very little data and therefore a lower bandwidth forward link 38 is provided while forward link 34 is preferably high bandwidth.

Referring now to Figure 2, a communications system 10 is shown that is similar to that of Figure 1. In this embodiment, a digital broadcast satellite 44 having control circuitry 40 replaces stratospheric platform 12. Another variation is also illustrated in that user terminal 14 may be incorporated into an automotive vehicle 46. However. this embodiment may also include a user terminal 14 as shown and described in Figure 1. The control circuitry 40 of digital broadcast 44 is similar to that provided on stratospheric platform 12. However, the digital broadcast satellite 44 is a high altitude communication device. The altitude of the digital broadcast satellite 44 has a substantially higher altitude than the stratospheric platform 12. Thus, gateway 22 must provide higher power level signals. Also, digital broadcast satellite 44 must also generate higher broadcast signals. Digital broadcast satellite 44 may be one of a plurality of known satellites such as a low earth orbit satellite, a medium earth orbit satellite, a geostationary orbit satellite, a high earth orbit satellite, and may also have varying orbital tracks. The operation of communications system 10 is similar to that described in Figure 1.

Referring now to Figure 3, a block diagram of a user terminal 14 is illustrated. User terminal 14 has a housing 50 that has an omni-directional antenna 52. The omni-directional antenna 52 preferably is capable of receiving satellite broadcasts and terrestrial cellular system broadcasts. The omni-directional antenna 52 is also capable of transmitting terrestrial cellular broadcasts. User terminal 14 has a digital radio receiver 54, with an amplifier 56. User terminal 14 also has a cellular receiver 58 with an amplifier 60 and a cellular transmitter 62 with an amplifier 64. Those skilled in the art will recognize that various digital radio receivers 54, cellular receivers 58, and cellular transmitters 62 are known to those skilled in the art. For example, digital radio receiver 54 may comprise an XM radio receiver or other type of high altitude transmission receiver. Digital radio receiver 54 may receive digital radio signals or other data signal from the high altitude transmission source. The configuration of these devices depends on the particular system and the frequencies used for communication.

Processor 66 is preferably a microprocessor based system. The processor may have a variety of functions but relative to the present invention, the processor 66 provides a switch function labeled SW1 and a second switch function labeled SW2. The processor 66 is coupled to a speaker 72, a display and data entry device 68, and a microphone 70. Processor 66 switches between the digital radio receiver 54 and the cellular receiver 58 to provide information to the digital display device 68 and the speaker 72. The switch SW2 switches between the microphone 70 and the display and entry device 68 for receiving information to transmit through cellular transmitter 62. As described above, the user device 14 may be similar to that of a personal digital assistant and various types of data entry as would be evident to those skilled in the art. The data entry device may comprise a keyboard or stylus for entering information. The speaker 72 and microphone 70 allows the user terminal 50 to act as a cellular phone and to allow the user to listen to music.

The user terminal 14 allows the user a unique combination of services not previously available in a single system. These services include receiving high quality digital radio broadcasts, two-way voice communications, Internet access, audio on demand, and video on demand. The advantages of the device are that a digital radio receiver is combined with a cellular transmitter and receiver to enable unique forward and return link elements. The system uses many known components and is therefore relatively low cost to produce. The present invention exploits the natural asymmetry that exists in many interactive applications wherein the bandwidth or the forward link is much greater than the return link. The present invention enables many applications such as Internet and digital radio broadcasts to be received. These systems may be used in a one-way manner but also are able to be used in a two-way manner.

While particular embodiments of the invention have been shown and described, numerous variations alternate embodiments will occur to those skilled in the art. Accordingly, it is intended that the invention be limited only in terms of the appended claims.

## Claims

1. A communications system comprising:
a high altitude communication device (12, 44) sending a forward communications signal (32);
a terrestrial wireless network (16) creating a return link (38);
a user terminal (14) coupled to said high altitude communication device (12, 44) receiving said forward communication signal (32) and coupled to said terrestrial wireless network (16) for creating a return link (38); and
a network operations center (20) having a gateway (22) for communicating with said high altitude communication device (12, 44), said network operations center (20) coupled to said terrestrial wireless network (16) for receiving communications requests from the user terminal (14) and providing content in response to the request.

2. A communications system as recited in claim 1, **characterized in that** said user terminal (14) comprises an antenna (52), a satellite receiver (54), a cellular transmitter (62), a display device (68), and a data entry device.

3. A communications system as recited in claim 1 or 2, **characterized in that** said user terminal (14) is portable.

4. A communications system as recited in any of claims 1 to 3, **characterized in that** said terrestrial wireless network (16) comprises a terrestrial cellular network.

5. A communications system as recited in any of claims 1 to 3, **characterized in that** said terrestrial cellular network (16) is a third generation cellular network.

6. A user terminal (14) comprising:
a housing (50);
an antenna (52) coupled to said housing;
a receiver (54) disposed within said housing and coupled to said antenna (52);
a cellular transmitter (62) disposed within said housing (50) and coupled to said antenna (52);
a display device (68) disposed within said housing;
a data entry device (68) disposed within said housing;
a processor (66) coupled to said display device, said data entry device, said cellular transmitter, and said receiver.

7. A user terminal as recited in claim 6, **characterized in that** said display device (68) and said entry device are co-extensive.

8. A user terminal as recited in claim 6 or 7, characterized by a microphone (70) coupled to said processor.

9. A user terminal as recited in any of claims 6 to 8, **characterized in that** said processor (66) is operable to switch between said microphone (70) and said entry device (68).

10. A user terminal as recited in any of claims 6 to 9, **characterized in that** a cellular receiver (58) coupled to said processor (66) and said antenna (52) and wherein said receiver (58) comprises radio receiver (54), said processor (66) operable to receive data from said radio receiver (54) and said cellular receiver (50).
